# EUROPÄISCHE PATENTSCHRIFT

(11) **EP 1 139 196 B1**
(45) Veröffentlichungstag und Bekanntmachung des Hinweises auf die Patenterteilung: **10.10.2007**
(21) Anmeldenummer: 00106809.7
(22) Anmeldetag: 30.03.2000
(51) Int. Cl.: G06F 21/00

(54) **Verfahren und System zur Freischaltung einer verschlüsselten Datei**
Method and system for activating an encrypted file
Procédé et système d'activation d'un fichier de données cryptées

(43) Veröffentlichungstag der Anmeldung: 04.10.2001
(73) Patentinhaber: SIEMENS AKTIENGESELLSCHAFT, 80333 München (DE)
(72) Erfinder: Thoone, Martin, D-35614 Asslar (DE); Drijfhout, Theo, D-35619 Braunfels (DE)

(56) Entgegenhaltungen:
- WO-A-98/42098
- US-A- 5 677 953
- US-A- 5 809 145
- US-A- 6 041 411

## Beschreibung

Die Erfindung betrifft ein Verfahren zur Freischaltung einer auf einem Speichermedium zusammen mit mindestens einer weiteren Datei abgespeicherten Datei zur Nutzung durch ein einziges oder eine begrenzte Anzahl von lokalen Computersystemen. Weiterhin betrifft die Erfindung ein System zur Verwaltung und Freigabe von Nutzungsrechten an Dateien, das folgende Komponenten aufweist:
- eine Vielzahl von lokalen Computersystemen, wobei jedes der Computersysteme durch eine im Computersystem abgespeicherte Gerätekennzahl identifizierbar ist,
- Speichermedien für die lokalen Computersysteme, auf denen mindestens zwei Dateien abgespeichert und mit einer Kennung versehen sind,
- eine Zentralstelle mit einem zentralen Computersystem, wobei zur Freigabe von Nutzungsrechten an einer Datei für eines der lokalen Computersysteme in der Zentralstelle Mittel zur Festlegung eines ersten und eines zweiten chiffrierten Codes vorhanden sind, wobei mindestens einer der Codes die Gerätekennzahl des lokalen Computersystems und mindestens einer der Codes die Kennung der freizuschaltenden Datei enthält,
- Mittel zur Übermittlung der chiffrierten Codes an das lokale Computersystem,
- Mittel zur Dechiffrierung der übermittelten Codes in dem lokalen Computersystem unter Einbeziehung der im lokalen Computersystem abgespeicherten Gerätekennzahl und zur Freischaltung der Datei zur Nutzung durch das lokale Computersystem.

Ein derartiges System ist aus der US 5,809,145 bekannt. Dort werden Verfahren und Computersysteme offenbart, bei denen Computer abhängige Produkt-Codes zur Anforderung von Datensets und Freischaltcodes zur Dechiffrierung chiffrierter Datensets generiert werden, wodurch ein Schutz gegen unauthorisierten Gebrauch der Datensets erreicht werden soll.

Computerprogramme und Datenbanken werden zumeist auf einem Speichermedium, wie beispielsweise einer CD-ROM, an den Endanwender verkauft. Ein solches Speichermedium weist eine hohe Speicherkapazität auf und kann zumeist mehrere Computerprogramme, gegebenenfalls in komprimierter Form, aufnehmen. Eine solche CD-ROM kann daher einen hohen Verkaufswert aufweisen. Mit Hilfe geeigneter Geräte ("CD-Brenner") ist es relativ einfach Kopien von CD-ROMs herzustellen. Kopierte CD-ROMs werden teilweise kostenlos unter Interessenten ausgetauscht oder gelangen illegal in den Handel. Es besteht deshalb ein Bedarf entsprechende Programme oder allgemeiner Dateien nur für registrierte Anwender freizugeben.

Da auf einer einzigen CD-ROM mehrere Programme oder Dateien vorhanden sein können, ist es weiterhin von Interesse nur einzelne oder eine bestimmte Anzahl von Programmen für einen bestimmten Anwender freizugeben. Beispielsweise kann eine CD-ROM die übliche Standardbürosoftware enthalten. Zu einer solchen Bürosoftware gehören beispielsweise ein Schreibprogramm, eine Tabellenkalkulation, ein Datenbankprogramm und ein Programm zur Erstellung von Präsentationen. Der einzelne Anwender ist aber unter Umständen nur an einem Teil der Programme interessiert, wie beispielsweise dem Schreibprogramm und der Tabellenkalkulation, während die anderen Komponenten für ihn nicht von Interesse sind. Weiterhin kann der Fall eintreten, daß ein Anwender nur an der aktualisierten Version eines dieser Programme interessiert ist, ansonsten ihm jedoch die älteren Versionen der restlichen Programme völlig ausreichen, weil er diese z.B. nur selten nutzt. Dennoch muss der Anwender in beiden Fällen unter Umständen das Gesamtpaket kaufen, da die Einzelprogramme nicht separat erhältlich sind. Der Einzelvertrieb der Programme bedeutet für den Hersteller nämlich einen erhöhten Aufwand und findet daher häufig nicht statt. Für die genannten Fälle ist es daher von Interesse, nur einzelne Programme oder Dateien einer CD-ROM für einen bestimmten Anwender zur Nutzung freizugeben. Idealerweise sollte diese Freigabe wiederum mit einem entsprechenden Kopierschutz verbunden sein, so dass nach Freigabe der Datei diese auch nur von dem registrierten und berechtigten Anwender genutzt werden kann.

Aus der EP 0 679 979 A1 ist ein Verfahren bekannt, mit dem zeitlich begrenzte Nutzungsrechte an einer Computersoftware vergeben werden. Die verschlüsselte Software wird hierzu zusammen mit einem Dateiverwaltungsprogramm zunächst auf einem Speichermedium abgespeichert. Das Speichermedium wird nun an den potentiellen Anwender verschickt. Das Dateiverwaltungsprogramm wird dann von dem Anwender in dessen Computersystem geladen. Das auf dem Speichermedium abgespeicherte Programm ist dann für dieses Computersystem zugänglich. Durch das in den Computer geladene Dateiverwaltungsprogramm ist der Zugang zu dem Programm beschränkt. Mit dem beschriebenen Verfahren kann zwar ein beschränkter Zugang zu einem Computerprogramm gewährleistet werden, jedoch ist die gezielte Freigabe nur einzelner Dateien oder Programme nicht vorgesehen.

Aufgabe der Erfindung ist es daher, ein Verfahren anzugeben, das zum einen sicherstellt, dass ein Computerprogramm oder eine Datei nur von einem berechtigten Anwender benutzt wird, und das zum anderen eine Freischaltung nur einzelner Programme oder Dateien eines Speichermediums für einen bestimmten Anwender erlaubt.

Eine weitere Aufgabe der Erfindung ist es, ein System zur Verwaltung und Freigabe von Nutzungsrechten an Dateien anzugeben, mit dem ein solches Verfahren ausgeführt werden kann.

Die erstgenannte Aufgabe wird erfindungsgemäß gelöst mit einem Verfahren zur Freischaltung einer auf einem Speichermedium zusammen mit mindestens einer weiteren Datei abgespeicherten und mit einer Kennung AC versehenen Datei zur Nutzung durch ein einziges oder eine begrenzte Anzahl von lokalen Computersystemen durch:
- Übermitteln einer im lokalen Computersystem abgespeicherten Gerätekennzahl ID(i-1) des Computersystems an eine Zentralstelle,
- Berechnung einer neuen Gerätekennzahl ID(i) mit der übermittelten Gerätekennzahl ID(i-1) und einem Wechselcode c in der Zentralstelle,
- Festlegung eines ersten chiffrierten Codes PIN mit der berechneten Gerätekennzahl ID(i) und einem Schlüssel k in der Zentralstelle,
- Festlegung eines zweiten chiffrierten Codes ACW mit der Kennung der freizugebenden Datei und dem Schlüssel k in der Zentralstelle,
- Übermittlung des ersten chiffrierten Codes PIN und des zweiten chiffrierten Codes ACW von der Zentralstelle an das lokale Computersystem,
- Berechnung der neuen Gerätekennzahl ID(i) in dem lokalen Computersystem aus der bisher abgespeicherten Gerätekennzahl ID(i-1) und dem in einem nicht-flüchtigen Speicher des lokalen Computersystems abgelegten Wechselcode c,
- Berechnung des Schlüssels k mit dem ersten chiffrierten Code PIN und der Gerätekennzahl ID(i),
- Berechnung der Kennung AC der Datei mit dem zweiten chiffrierten Code ACW und dem Schlüssel k,
- Freigabe der mit der Kennung AC versehenen Datei zur Nutzung durch das lokale Computersystem.

Bei dem erfindungsgemäßen Verfahren wird die ausschließliche Nutzung einer Datei durch einen berechtigten und registrierten Anwender insbesondere dadurch erreicht, dass die Datei verschlüsselt ist. Das Speichermedium, beispielsweise eine CD-ROM, auf der die Dateien abgespeichert sind und verteilt werden, kann somit zwar weiterhin kopiert werden, jedoch können die Dateien zunächst nur bei Kenntnis des entsprechenden Schlüssels zur Entschlüsselung der Dateien genutzt werden. Um zu verhindern, dass auch der entsprechende Schlüssel von einem berechtigten Anwender an einen unberechtigten Anwender weitergegeben wird, ist vorgesehen, dass auch der Schlüssel seinerseits nur in chiffrierter Form an den berechtigten Anwender übermittelt wird. Der chiffrierte Code, der den Schlüssel enthält, enthält weiterhin die Gerätekennzahl des berechtigten Computers. Hierdurch ist gewährleistet, dass bei Weitergabe des chiffrierten Codes, der den Schlüssel enthält, die Nutzung dieses Codes auf einem weiteren Computer mit einer anderen Gerätekennzahl ausgeschlossen ist.

In einer weiteren Ausführungsform ist vorgesehen, dass die Datei nach einmaliger Freischaltung auf einer begrenzten Anzahl von Computern nutzbar ist. Dies kann dadurch erreicht werden, dass diese Computer dieselbe Gerätekennung aufweisen oder nur Teile der Gerätekennung verwendet werden, die bei diesen Computern gleich sind.

Um nur bestimmte Dateien zur Nutzung freizugeben, ist ein zweiter Code vorgesehen, der Angaben über die freizuschaltende Datei enthält. Auch dieser zweite Code muss zunächst in dem Computersystem erst dechiffriert werden, wobei dies ebenfalls nur mit der richtigen Gerätekennzahl des Computersystems möglich ist. Eine Dechiffrierung des Codes auf einem nicht berechtigten Computersystem führt aufgrund dessen abweichender Gerätekennzahl zu einem anderen Dechiffrierergebnis und damit zu einer falschen Kennung für die freizugebende Datei. Um die Sicherheit des Verfahrens weiter zu erhöhen, ist zudem vorgesehen, dass die Gerätekennzahl bei jeder Freigabe einer Datei durch die Zentralstelle geändert wird.

Die Dateien sind auf dem Speichermedium vorzugsweise in einer logischen Dateistruktur, insbesondere in einer hierarchischen Dateistruktur, abgespeichert. Die Kennung für eine bestimmte Datei kann dann anhand der Dateistruktur in einfacher Weise angegeben werde. Insbesondere ist vorgesehen, dass die Kennung einer Datei als Vektor beschreibbar ist. Durch einen solchen Vektor kann die Position in einer hierarchischen Dateistruktur besonders einfach wiedergegeben werden. Dies kann beispielsweise dadurch geschehen, dass die Komponenten des Vektors den Pfad wiedergeben, auf dem man zu der freizugebenden Datei in der Dateistruktur gelangt. Von besonderem Vorteil ist es dabei, wenn der Vektor binäre Komponenten, also Komponenten die nur zwei Zustände aufweisen, annimmt. Die Komponenten des Vektors können dann den Weg innerhalb der hierarchischen Dateistruktur kennzeichnen, wobei beispielsweise durch den Wert 1 ein Weg freigegeben wird, während durch den Wert 0 ein Weg blockiert ist. Dies kann insbesondere auch dadurch erfolgen, dass der Vektor mindestens m Komponenten aufweist, wobei m die Anzahl der Dateien ist. Unter Dateien werden hierbei auch Dateiverzeichnisse verstanden, die selbst wiederum Dateiverzeichnisse und/oder Dateien enthalten können.

Weist eine CD-ROM somit eine Dateistruktur mit m Dateien (einschließlich der Dateiverzeichnisse) auf, so weist insbesondere jeder Vektor einer Datei m Komponenten auf, die beispielsweise mit a(1), a(2), a(3), .... a(m) bezeichnet werden. Jede dieser Komponenten a(x) bezeichnet dabei eine Datei oder ein Dateiverzeichnis. Führt der Weg zu einer bestimmten Datei D(x) in der hierarchischen Dateistruktur beispielsweise über die Dateiverzeichnisse a(2), a(5), a(9), so werden die Komponenten a(2), a(5), a(9) und a(x) mit dem Wert 1 gekennzeichnet, während alle anderen Komponenten des Vektors den Wert 0 annehmen. Die Zuordnung eines solchen Vektors zu einer bestimmten Datei wird durch das Dateiverwaltungsprogramm vorgenommen, das im Computer abgespeichert ist. Der Vektor AC für die Kennung der freizuschaltenden Datei wird an den berechtigten Anwender, wie bereits erwähnt, in chiffrierter Form übermittelt. Der chiffrierte Code kann dabei insbesondere auch weitere Informationen, wie beispielsweise über eine zeitliche Begrenzung des Nutzungsrechts enthalten. Dies ist insbesondere dadurch möglich, dass der chiffrierte Code ebenfalls als Vektor übermittelt oder von dem Computersystem in einen Vektor umgewandelt wird, wobei der Vektor dann eine oder mehrere Komponenten mit Information über die zeitliche Begrenzung des Nutzungsrechts enthält. Hierdurch ist es zudem auf einfache Weise möglich, zunächst nur Nutzungsrechte zu Testzwecken zu einem günstigen Preis oder unentgeldlich für eine begrenzte Nutzungsdauer zu erwerben und erst danach zu entscheiden, ob die unbefristeten Nutzungsrechte an der Software erworben werden sollen.

Da die Kennung für die freizuschaltende Datei vorzugsweise als Vektor verarbeitet wird, ist es insbesondere von Vorteil, wenn auch der Schlüssel k, mit dem die Dateien verschlüsselt sind, und die Gerätekennung ID als Vektor verarbeitet werden. Die Verschlüsselung kann nach einem der bekannten Verfahren erfolgen, insbesondere nach dem Data Encryption Standard (DES) unter Verwendung eines Schlüssels mit einer Länge von 56 Bit.

Das erfindungsgemäße Verfahren kann allgemein zur Freigabe und Verwaltung von Nutzungsrechten an Dateien eingesetzt werden, jedoch kann es insbesondere dann vorteilhaft eingesetzt werden, wenn auf den Computersystemen nur eine bestimmte Art von Computerprogrammen und -dateien eingesetzt wird, da dann eine Verwaltung durch eine einzige Zentralstelle leichter zu verwirklichen ist. Besonders vorteilhaft kann das Verfahren deshalb beispielsweise für die Freigabe von Nutzungsrechten an Programmen und Dateien für Navigationscomputer in Kraftfahrzeugen eingesetzt werden. In solchen Navigationssystemen werden neben Straßenkartendaten und Reiseführern auch weitere Anwendungsprogramme wie beispielsweise zur Zuordnung von Nummerierungen von Autobahnanschlußstellen zu geographischen Daten und dergleichen verwendet. Aufgrund der großen Speicherdichte von CD-ROMs und insbesondere der neueren DVDs können auf einem einzelnen Speichermedium beispielsweise alle Straßenkarten der Länder Europas und die entsprechenden Reiseführer dieser Länder untergebracht werden. Ein solcher Datenträger stellt zum einen einen vergleichsweise hohen Wert dar, zum anderen benötigt nicht jeder Anwender alle Daten. Beispielsweise kann es sein, dass ein Anwender nur die Straßenkartendaten seines Heimatlandes benötigt, weil er nie mit dem eigenen Kraftfahrzeug im Ausland unterwegs ist. Ein anderer Anwender wiederum bereist dagegen neben dem Heimatland auch die angrenzenden Länder mit dem eigenen PKW regelmäßig, so dass er auch die Straßenkartendaten dieser Länder sowie die Reiseführer und/oder Hoteldatenbanken oder dergleichen benötigt.

Mit dem erfindungsgemäßen Verfahren können für die unterschiedlichsten Nutzungswünsche somit Freigaben für die Dateien gegeben werden, so dass jeder Anwender zunächst einmal nur die Nutzungsrechte für die für ihn zunächst wichtigen Regionen kauft. Hat ein Anwender nun zusammen mit dem Navigationssystem beispielsweise nur die Nutzungsrechte an den Landkartendaten für sein Heimatland erworben, so sind mit dem Kauf dieser Nutzungsrechte die Gerätekennzahl des entsprechenden Navigationssystems und vorzugsweise auch die Information über die bereits gekauften Nutzungsrechte in der Zentralstelle hinterlegt. Im Navigationssystem selbst abgespeichert ist ebenfalls die Gerätekennzahl und ein Wechselcode c. Will der Anwender nun seine Nutzungsrechte auf die Straßenkartendaten eines weiteren Landes ausdehnen, so setzt er sich mit der Zentralstelle in Verbindung und teilt dieser neben seinen Erkennungsdaten seinen Wunsch und die Art der Zahlung, beispielsweise seine Kreditkartennummer, mit. Die Zentralstelle, die die Gerätekennzahl ID(i) dieses Anwender kennt, berechnet zunächst mit dem ebenfalls in der Zentralstelle abgespeicherten Wechselcode c eine neue Gerätekennzahl ID(i). Anschließend wird in der Zentralstelle ein erster chiffrierter Code PIN mit der berechneten Gerätekennzahl ID(i) und dem Schlüssel k zur Entschlüsselung der Datei festgelegt. Anschließend wird in der Zentralstelle ein zweiter chiffrierter Code ACW mit der Kennung der freizugebenden Datei und dem Schlüssel k festgelegt. Bei den chiffrierten Codes handelt es sich um numerische Codes, die insbesondere auch in dezimaler Form an den Anwender übermittelt werden können. In letzterem Fall werden nach der Übermittlung der dezimalen Codes an den Anwender und nach Eingabe der Codes in das Navigationssystem die dezimalen Codes zunächst in binäre Codes umgewandelt, wobei die einzelnen Stellen des binären Codes die Komponenten eines Vektors sind. Im Navigationssystem wird zunächst die neue Gerätekennzahl ID(i) aus der bisher abgespeicherten Gerätekennzahl ID(i-1) und dem in einem nicht-flüchtigen Speicher des lokalen Computersystems abgelegten Wechselcode c berechnet. Anschließend wird in einem weiteren Berechnungsschritt mit dem ersten chiffrierten Code PIN und der neu berechneten Gerätekennzahl ID(i) der Schlüssel k berechnet. In einem weiteren Schritt wird mit dem Schlüssel k und dem zweiten chiffrierten Code ACW die Kennung AC der freizugebenden Datei berechnet. Anschließend wird von dem Dateiverwaltungssystem die Datei mit der Kennung AC zur Nutzung durch das Navigationssystem freigeschaltet.

Ein erfindungsgemäßes System zur Verwaltung und Freigabe von Nutzungsrechten an Dateien, das zur Durchführung des erfindungsgemäßen Verfahrens geeignet ist, beinhaltet die im unabhängigen Systemanspruch angegebenen Komponenten.

Um mehrere Dateien auf einem einzigen Speichermedium unterbringen zu können, muss dieses eine ausreichend große Speicherkapazität aufweisen. Als besonders vorteilhafte Speichermedien werden insbesondere eine CD-ROM oder eine DVD angesehen. Die Dateien können aber auch auf der Festplatte des lokalen Computers in verschlüsselter Form abgespeichert sein. In diesem Fall kann die Übertragung der Dateien beispielsweise über das Internet erfolgt sein.

In einer besonderen Ausführungsform ist vorgesehen, dass der erste und der zweite chiffrierte Code direkt von der Zentralstelle in das lokale Computersystem übermittelbar sind. Diese Übermittlung kann sowohl drahtgebunden als auch drahtlos erfolgen, wobei in beiden Fällen vorzugsweise das bestehende Kommunikationsnetz, also ein Telefonfestnetz oder ein Mobilfunknetz, eingesetzt werden. Der Anwender kann dann direkt in seinem Computersystem die gewünschte Datei auswählen und diese Auswahl zusammen mit den benötigten Zahlungsdaten über das Telefonnetz oder über das Internet an die Zentralstelle übermitteln. Die Übermittlung der chiffrierten Codes erfolgt dann auch von der Zentralstelle direkt in das Computersystem überdas Telefonnetz oder das Internet. Hierdurch kann eine sehr schnelle und automatisierte Freigabe von Nutzungsrechten realisiert werden. Die Nutzungsrechte werden somit über die an sich bekannten Systeme für elektronischen Handel freigeschaltet. Die Übermittlung des Freischaltungswunsches und der chiffrierten Codes kann aber auch in herkömmlicher Weise durch ein Telefongespräch oder durch Übermittlung per Briefpost erfolgen.

In einer besonderen Ausführungsform ist vorgesehen, dass die Codes auf einem kostengünstigen Speichermedium geringer Dichte, wie beispielsweise einer IC-Card, abgespeichert sind, wodurch durch einfaches Einführen der IC-Card in ein entsprechendes Lesegerät des Computersystems die Codes in das Computersystem eingegeben werden und eine manuelle Eingabe entbehrlich ist.

In einer weiteren besonderen Ausführungsform, die insbesondere für Kraftfahrzeuganwendungen und damit für Navigationssysteme von Interesse ist, kann die Eingabe der Codes auch durch Spracheingabe erfolgen.

Die Erfindung wird nachfolgend anhand eines Ausführungsbeispiels und der Zeichnung näher erläutert. Es zeigen:
- Fig. 1:: eine Systemübersicht,
- Fig. 2:: die Dateistruktur der Dateien,
- Fig. 3:: verschiedene Varianten der Kennung der freizuschaltenden Datei,
- Fig. 4:: eine Systemübersicht für ein automatisiertes Freigabeverfahren,
- Fig. 5:: ein Ablaufdiagramm des Verfahrens.

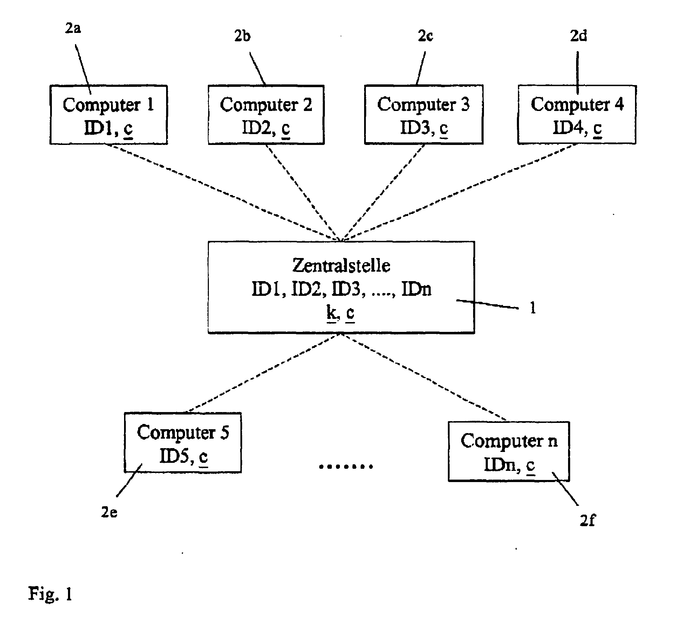

Figur 1 zeigt eine Systemübersicht mit einer Zentralstelle 1 und sieben Computern 2a bis 2f von insgesamt n Computern. Bei den Computern 2 handelt es sich um lokale Computersysteme unterschiedlichster Art. Die Computer 2 sind mit der Zentralstelle 1 nicht über ein festes Leitungsnetz verbunden. Es ist jedoch möglich, dass die Computer 2 mit der Zentralstelle 1 über eine Telefon- oder Internetverbindung Kontakt aufnehmen. Aber auch dies ist keine Voraussetzung zur Durchführung des Verfahrens.

In der Zentralstelle 1 sind neben den Gerätekennungen ID1 bis IDn der Schlüssel k zur Entschlüsselung der verschlüsselten Dateien sowie der Wechselvektor c zum Verändern der Gerätekennung ID bei jeder Freigabeprozedur als Vektoren abgespeichert. In jedem der lokalen Computer 2 ist neben der individuellen Gerätekennung ID auch der Wechselvektor c abgespeichert. Ein Softwarepaket ist auf einer CD-ROM abgespeichert und enthält mehrere Programme und Datenbanken in einer hierarchischen Dateistruktur. Weiterhin ist auf der CD-ROM ein Dateiverwaltungsprogramm abgespeichert.

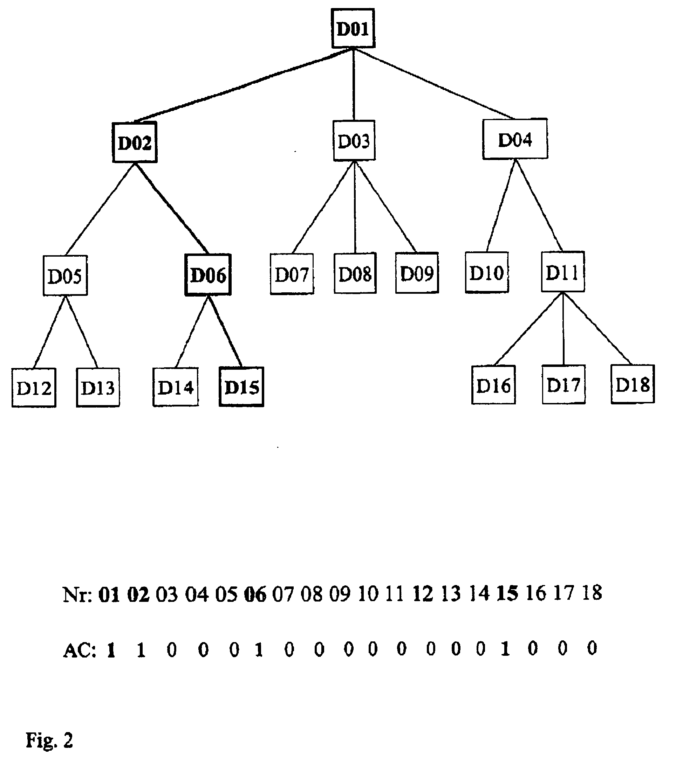

In Figur 2 ist eine solche Dateistruktur dargestellt, wobei die Dateien D01 bis D18 auch Dateiverzeichnisse sein können und somit weitere Dateien oder Dateiverzeichnisse enthalten. Im Falle einer CD-ROM für ein Navigationssystem kann es sich bei der Datei D01 beispielsweise um das Dateiverzeichnis "Länder" handeln. Bei den Dateien D02 bis D04 kann es sich in diesem Fall um regionale Dateiverzeichnisse handeln, insbesondere um einzelne Länder. Diese Dateiverzeichnisse können weiter aufgespalten sein, wie dies beispielsweise bei dem Dateiverzeichnis D02 der Fall ist, das in die Dateiverzeichnisse D05 und D06 aufspaltet. Beispielsweise kann es sich bei D02 um ein Länderverzeichnis "Deutschland" handeln und bei den Dateiverzeichnissen D05 und D06 um die Dateiverzeichnisse für "Nord- bzw. Süddeutschland". Den jeweiligen Dateiverzeichnissen D05 und D06 sind dann Dateien für die Landkartendaten D12 bzw. D14 und Dateien D13 bzw. D15 mit den zugehörigen Reiseführern zugeordnet. Bei D03 kann es sich um ein Dateiverzeichnis für ein weiteres Land, beispielsweise Frankreich, handeln, wobei nunmehr diesem Dateiverzeichnis direkt die entsprechenden Dateien D07 bis D09 zugeordnet sind und es sich beispielsweise um Dateien für die Landkartendaten, einen Reiseführer und ein Hotelverzeichnis handeln kann. Jeder dieser Dateien ist eine Kennung zugeordnet, die 18 Komponenten aufweist und damit der Gesamtsumme der Dateien bzw. Dateiverzeichnisse entspricht. Das Dateiverzeichnis D01 ist dabei durch die erste Komponente des Vektors, das Dateiverzeichnis D02 durch die zweite Komponente und allgemein die Datei m durch die Komponente m des Vektors gekennzeichnet. Der gesamte Vektor für die Kennung einer Datei setzt sich nun aus dem Weg zusammen, der zu dieser Datei führt. Dies wird am Beispiel der Datei D15 beschrieben und ist in Fig. 2 im unteren Bereich dargestellt.

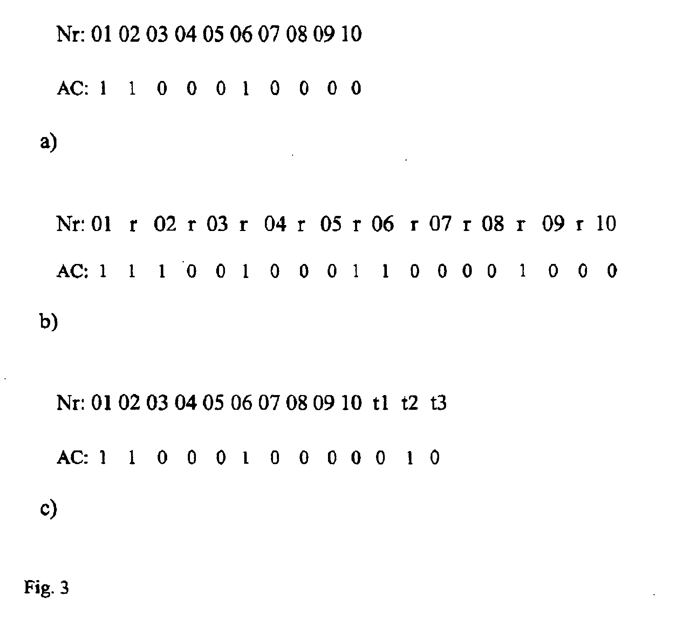

Der Weg zu der Datei D15 führt über die Dateien bzw. Dateiverzeichnisse D01, D02, D06 und D15, so dass im zugehörigen Vektor für die Datei D15 die entsprechenden Positionen 01, 02, 06 und 15 den Wert 1 annehmen, während alle anderen Komponenten des Vektors den Wert 0 annehmen. Um einen ausreichenden Schutz der Kennung einer Datei zu gewährleisten, sollte diese aus nicht zu wenigen Komponenten bestehen. Um auch bei einer geringen Anzahl von Dateien einen ausreichenden Schutz durch die Kennung zu gewährleisten, kann diese erweitert werden, wie dies in Fig. 3 dargestellt ist.

In Figur 3a ist eine Kennung mit 10 Komponenten dargestellt, wobei dies der Anzahl der Dateien entsprechen soll. In Fig. 3b ist eine Erweiterung dieser Kennung auf 19 Komponenten dargestellt, wobei zwischen den eine Datei kennzeichnenden Komponenten Zufallskomponenten r eingefügt sind, die durch das System wieder eliminiert werden.

Der Nutzer eines der Computer 2 kann nun eine CD-ROM mit mehreren Dateien käuflich erwerben, wobei er zunächst noch keine endgültigen Nutzungsrechte erwerben muss. Beispielsweise erwirbt der Käufer eines Neuwagens zugleich mit diesem ein Navigationssystem und eine CD-ROM mit den zugehörigen Datenbanken. Da der Anwender jedoch u.U. als solcher in der Zentralstelle noch nicht registriert ist, hat er mit seinem Computersystem auch noch keinen Zugang zu den einzelnen Dateien, die auf der CD-ROM verschlüsselt abgelegt sind. Zunächst wird der Anwender das Dateiverwaltungssystem, das ebenfalls auf der CD-ROM abgespeichert ist, in sein Computersystem laden. Anschließend muss sich der Anwender von der Zentralstelle die Nutzungsberechtigung einholen. Hierzu kann der Anwender mit der Zentralstelle telefonisch Kontakt aufnehmen.

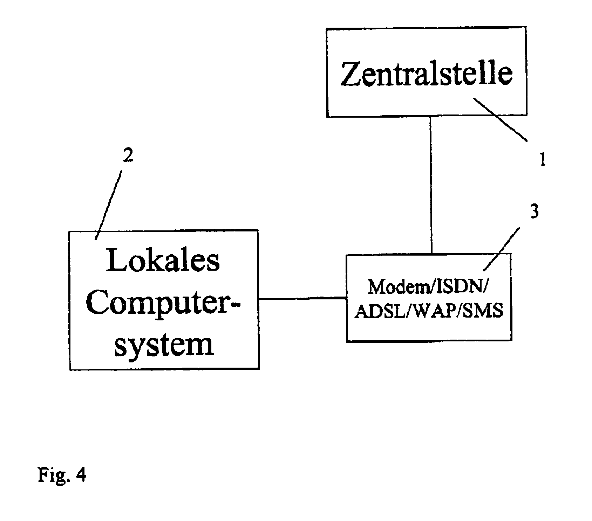

Im weiteren soll jedoch ein automatisiertes Verfahren beschrieben werden, das die in Figur 4 dargestellten Komponenten nutzt. Hierbei handelt es sich neben dem lokalen Computer 2 und der Zentralstelle 1 um ein Vermittlungsmedium 3, das mit beiden verbunden ist. Die Verbindung zwischen der Zentralstelle 1 und dem Computersystem 2 kann dabei beispielsweise über eine Festnetztelefonverbindung mittels eines Modems, einer ISDN- oder einer ADSL-Leitung erfolgen. Es kann sich weiterhin um eine Funkverbindung mit einem Mobilfunktelefon und einer Datenübertragung nach dem WAP-Standard handeln, oder die Datenübertragung kann über das Mobilfunktelefon als SMS-Nachricht erfolgen. Als weiteres Beispiel wird eine Datenübertragung über das Internet genannt.

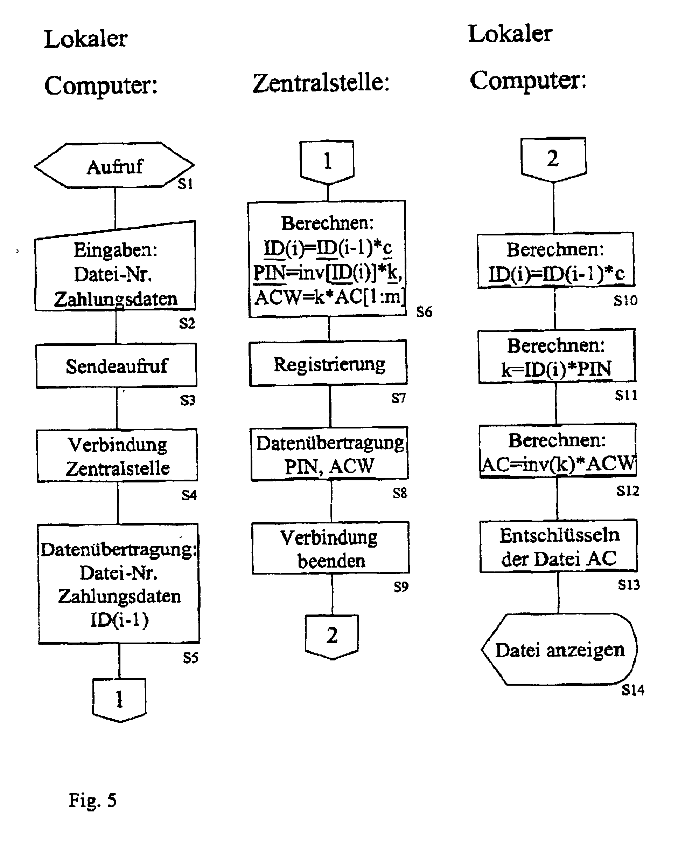

Das erfindungsgemäße Verfahren selbst wird nachfolgend anhand der Figur 5 näher erläutert.

Der Computernutzer ruft im Schritt S1 zunächst ein Menuprogramm auf, das ihm eine Auswahl über die auf der CD-ROM abgespeicherten Programme und Datenbanken auflistet. Der Anwender wählt eines oder mehrere der gewünschten Programme aus und gibt zusätzlich die erforderlichen Angaben zu den Zahlungsmodalitäten, wie beispielsweise seine Kreditkartennummer, ein (Schritt S2). Anschließend aktiviert der Anwender den Sendeaufruf, mit dem die Verbindung zur Zentralstelle aufgerufen wird. In Schritt S4 erfolgt schließlich die Herstellung der Verbindung zur Zentralstelle, beispielsweise über eine Mobilfunkverbindung im Falle eines Kraftfahrzeugnavigationssystems oder auch über eine Internetverbindung. Anschließend erfolgt im Schritt S5 die Übertragung des Freischaltungswunsches, der Zahlungsdaten, sowie der gegenwärtigen Gerätekennung ID(i-1), die in einem nicht-flüchtigen Speicher des Computers abgelegt ist und automatisch mit übermittelt wird.

Nach Empfang dieser Daten berechnet die Zentralstelle zunächst eine neue Gerätekennung ID(i) aus der bisherigen Gerätekennung ID(i-1) und dem Wechselvektor c, beispielsweise: ID(i) = ID(i-1)*c.

Anschließend wird ein erster chiffrierter Code PIN berechnet, der die neue Gerätekennung ID(i) und den für die Verschlüsselung der Dateien der CD-ROM erforderlichen Schlüssel k enthält, beispielsweise gemäß: PIN = inv[ID(i)]*k.

Anschließend wird ein zweiter chiffrierter Code ACW berechnet, der den Schlüssel k sowie die Kennung AC für die gewünschte freizuschaltende Datei enthält (Schritt S6), beispielsweise gemäß: ACW = k * AC.

In Schritt S7 werden die neue Gerätekennung ID(i) sowie eine Information über die freigeschaltete Datei und die Zahlungsmodalitäten in der Zentralstelle abgespeichert.

Anschließend werden die chiffrierten Codes PIN und ACW an den lokalen Computer zurückübertragen, und die Verbindung wird beendet. Im Falle der geschilderten automatischen Freigabe können die chiffrierten Codes PIN und ACW direkt als Vektoren bzw. Binärzahlen übermittelt werden.

Im Falle einer Freigabe durch ein Telefongespräch oder auf dem Postwege ist es vorteilhaft, wenn der Vektor, der binäre Komponenten enthält, zunächst als Binärzahl geschrieben und in eine Dezimalzahl umgewandelt wird, wobei dann die Dezimalzahl an den Anwender übermittelt wird. Der Anwender kann in diesem Fall die einfachere und kürzere Dezimalzahl in sein Computersystem eingeben, das dann wiederum die Umwandlung in eine Binärzahl bzw. in einen Vektor mit binären Komponenten vornimmt.

Das im Computer nach Übermittlung oder Eingabe der Codes PIN und ACW ablaufende Verfahren ist ebenfalls in Fig. 5 in den Schritten S10 bis S14 dargestellt. Zunächst wird im Computersystem die neue Gerätekennung ID(i) aus der bisher im Gerät abgespeicherten bisherigen Gerätekennung ID(i-1) und dem ebenfalls im Computersystem abgespeicherten Wechselvektor c berechnet gemäß: ID(i) = ID(i-1)*c.

Mit der neuen Gerätekennung ID(i) und dem ersten chiffrierten Code PIN kann nun der Schlüssel k zur Entschlüsselung der Dateien berechnet werden. Anschließend wird mit dem Schlüssel k bzw. dem zu dem Schlüsselvektor k inversen Vektor inv(k) und dem zweiten chiffrierten Code ACW die Kennung AC der freizuschaltenden Datei berechnet gemäß: AC = inv(k)*ACW. Für symmetrische Verschlüsselungsalgorithmen ist inv(k) = k.

Das Dateiverwaltungssystem gibt nun die zu der Kennung AC gehörende Datei zur Nutzung frei und diese kann über den nunmehr bekannten Schlüssel k entschlüsselt werden und zur Anzeige gebracht oder zur weiteren Bearbeitung genutzt werden.

Bei dem erfindungsgemäßen Verfahren ist somit die Freigabe einer Datei immer an die Gerätekennung gekoppelt, so dass die Freigabecodes nicht für ein anderes System genutzt werden können. Durch die bei jeder neuen Freigabe einer Nutzungsberechtigung vorgenommene Änderung der Gerätekennung wird eine erhöhte Sicherheit erreicht. Die Dateien auf dem Datenträger sind zudem mit dem Schlüssel k verschlüsselt, wobei der Schlüssel k aus dem ersten chiffrierten Code PIN nur bei Kenntnis der Gerätekennung erzeugt werden kann. Die Kennung AC der freizuschaltenden Datei wiederum kann aus dem zweiten chiffrierten Code erst bei Kenntnis des Schlüssels k berechnet werden.

Mit dem erfindungsgemäßen Verfahren kann weiterhin auch eine zeitlich befristete Freigabe von Dateien realisiert werden. Eine solche zeitlich befristete Freigabe ist beispielsweise von Interesse, um eine Software für wenige Tage zu testen und erst nach dem Test zu entscheiden, ob ein volles Nutzungsrecht erworben werden soll. In einem solchen Fall kann für einen geringen Preis die CD-ROM mit den Dateien erworben werden und die Dateien können über die Zentralstelle für einen befristeten Zeitraum von beispielsweise 3 Tagen oder einer Woche freigeschaltet werden. Auch bei Kraftfahrzeugnavigationssystemen ist eine befristete Freigabe von Interesse, z. B. dann wenn ein Anwender nur für einen beschränkten Zeitraum Landkartendaten eines bestimmten regionalen Bereichs benötigt. Hierbei kann es sich beispielsweise um einen einmaligen Auslandsurlaub in einem Land X für wenige Wochen handeln.

Eine solche zeitlich befristete Freigabe einer Datei kann dadurch erreicht werden, dass die Kennung der freizuschaltenden Datei Komponenten enthält, die eine zeitlich befristete Freigabe kennzeichnen. Eine entsprechende Kennung ist beispielsweise in Fig. 3c dargestellt. In diesem Beispiel sind die ersten 10 Komponenten des Vektors AC für die Kennung mit den auf der CD-ROM abgespeicherten Dateien wie in den zuvor beschriebenen Fällen verknüpft. Weiterhin enthält der Vektor nun aber die Komponenten t1, t2 und t3, die Hinweise auf eine zeitlich beschränkte Nutzung geben. Beispielsweise kann über die Komponente t1 eine Freigabe der Datei für einen Zeitraum von einer Woche gegeben sein, wenn diese Komponente auf 1 gesetzt ist. Entsprechend kann über die Komponente t2 eine Freigabe für einem Zeitraum von einem Monat gegeben sein, wenn diese Komponente auf 1 gesetzt ist. In entsprechender Weise kann über die Komponente t3 die Freischaltung für einen Zeitraum von 6 Monaten vorgegeben werden. Der Zeitraum beginnt dabei erst mit der Freischaltung der Datei zu laufen. Das Computersystem bzw. das Dateiverwaltungsprogramm des Computersystems erkennt dabei, ob eine der Komponenten t1 bis t3 auf eins gesetzt wurde, und setzt eine entsprechende Zeitmarke, wobei bei jeder geplanten neuen Nutzung der Datei geprüft wird, ob der gesetzte Zeitrahmen abgelaufen ist.

## Patentansprüche

1. Verfahren zur Freischaltung einer auf einem Speichermedium zusammen mit mindestens einer weiteren Datei abgespeicherten und mit einer Kennung AC versehenen Datei zur Nutzung durch ein einziges oder eine begrenzte Anzahl von lokalen Computersystemen durch:
- Übermitteln einer im Computersystem abgespeicherten Gerätekennzahl ID(i-1) des Computersystems und eines Freischaltwunsches zu einer freizugebenden Datei des Speichermediums an eine Zentralstelle,
und durch, in der Zentralstelle,
- Berechnung einer neuen Gerätekennzahl ID(i) mit der übermittelten Gerätekennzahl ID(i-1) und einem in der Zentralstelle abgespeicherten Wechselcode c
- Festlegung eines ersten chiffrierten Codes PIN mit der berechneten Gerätekennzahl ID(i) und einem Schlüssel k
- Festlegung eines zweiten chiffrierten Codes ACW mit der Kennung der freizugebenden Datei und dem Schlüssel k,
- Übermittlung des ersten chiffrierten Codes PIN und des zweiten chiffrierten Codes ACW von der Zentralstelle an das lokale Computersystem,
und durch, im lokalen Computersystem,
- Berechnung der neuen Gerätekennzahl ID(i) in dem lokalen Computersystem aus der bisher abgespeicherten Gerätekennzahl ID(i-1) und dem in einem nicht-flüchtigen Speicher des lokalen Computersystems abgelegten Wechselcode c
- Berechnung des Schlüssels k mit dem ersten chiffrierten Code PIN und der Gerätekennzahl ID(i)
- Berechnung der Kennung AC der Datei mit dem zweiten chiffrierten Code ACW und dem Schlüssel k,
- Freigabe der mit der Kennung AC versehenen Datei zur Nutzung durch das lokale Computersystem.

2. Verfahren nach Anspruch 1, **dadurch gekennzeichnet, dass** die Dateien mit dem Schlüssel k verschlüsselt sind und zur Nutzung durch das Computersystem mit dem Schlüssel k entschlüsselt werden.

3. Verfahren nach einem der vorhergehenden Ansprüche, **dadurch gekennzeichnet, dass** die Dateien auf dem Speichermedium in einer logischen Dateistruktur, insbesondere in einer hierarchischen Dateistruktur, abgespeichert sind.

4. Verfahren nach einem der vorhergehenden Ansprüche, **dadurch gekennzeichnet, dass** die Kennung einer Datei als Vektor beschreibbar ist.

5. Verfahren nach Anspruch 4, **dadurch gekennzeichnet, dass** der Vektor binäre Komponenten aufweist.

6. Verfahren nach Anspruch 4 oder 5, **dadurch gekennzeichnet, dass** der Vektor mindestens m Komponenten aufweist, wobei m die Anzahl der Dateien ist.

7. Verfahren nach Anspruch 6, **dadurch gekennzeichnet, dass** über m Komponenten a(1), a(2), a(3), ... des Vektors AC(x)=(a(1), a(2), a(3), ...., a(x-1), a(x), a(x+1), ..., a(m)) die Position einer Datei D(x) in der hierarchischen Dateistruktur derart bestimmt wird, **dass** alle Komponenten des Vektors AC(x), die Dateien zugeordnet sind, von denen die Datei D(x) hierarchisch abhängig ist, einen ersten Wert, insbesondere den Wert 1, annehmen, während alle verbleibenden Komponenten, die Dateien zugeordnet sind, von denen die Datei D(x) hierarchisch nicht abhängig ist, einen zweiten Wert, insbesondere den Wert O, annehmen.

8. Verfahren nach einem der vorhergehenden Ansprüche, **dadurch gekennzeichnet, dass** der Schlüssel k als Vektor beschreibbar ist.

9. Verfahren nach einem der vorhergehenden Ansprüche, **dadurch gekennzeichnet, dass** die Gerätekennung ID als Vektor beschreibbar ist.

10. Verfahren nach einem der vorhergehenden Ansprüche, **dadurch gekennzeichnet, dass** es sich bei dem Computersystem um einen Navigationscomputer eines Kraftfahrzeug-Navigationssystems handelt.

11. Verfahren nach einem der vorhergehenden Ansprüche, **dadurch gekennzeichnet, dass** die Dateien Straßenkartendaten enthalten.

12. Verfahren nach einem der vorhergehenden Ansprüche, **dadurch gekennzeichnet, dass** die Dateien Anwendungsprogramme enthalten.

13. Verfahren nach einem der vorhergehenden Ansprüche, **dadurch gekennzeichnet, dass** einer der chiffrierten Codes eine Information über eine zeitliche Begrenzung des Nutzungsrechts enthält.

14. Verfahren nach Anspruch 13, **dadurch gekennzeichnet, dass** der zweite chiffrierte Code als Vektor beschreibbar ist und der Vektor eine oder mehrere Komponenten enthält, in der die Information über die zeitliche Begrenzung der Nutzungsdauer abgelegt ist.

15. Verfahren nach einem der vorhergehenden Ansprüche, **dadurch gekennzeichnet, dass** die Vektoren der chiffrierten Codes vor der Übermittlung in Dezimalzahlen umgewandelt werden.

16. Verfahren nach einem der vorhergehenden Ansprüche, **dadurch gekennzeichnet, dass** die Datei(en) über ein Kommunikationsnetz an das Computersystem übermittelt wird (werden).

17. System zur Verwaltung und Freigabe von Nutzungsrechten an Dateien, das die folgenden Komponenten beinhaltet:
- eine Vielzahl von lokalen Computersystemen (2a bis 2n), wobei jedes der Computersysteme (2) durch eine im Computersystem (2) abgespeicherte Gerätekennzahl identifizierbar ist,
- Speichermedien für die lokalen Computersysteme (2), auf denen mindestens zwei Dateien abgespeichert und mit einer Kennung versehen sind,
- eine Zentralstelle (1) mit einem zentralen Computersystem, wobei zur Freigabe von Nutzungsrechten an einer Datei für eines der lokalen Computersysteme in der Zentralstelle Mittel zur Festlegung eines ersten und eines zweiten chiffrierten Codes (PIN bzw. ACW) vorhanden sind, wobei mindestens einer der Codes die Gerätekennzahl des lokalen Computersystems und mindestens einer der Codes die Kennung AC der freizuschaltenden Datei enthält,
- Mittel zur Übermittlung der chiffrierten Codes an das lokale Computersystem (2),
- Mittel zur Dechiffrierung der übermittelten Codes in dem lokalen Computersystem (2) unter Einbeziehung der im lokalen Computersystem (2) abgespeicherten Gerätekennzahl und zur Freischaltung der Datei zur Nutzung durch das lokale Computersystem (2),
**dadurch gekennzeichnet, dass** in der Zentralstelle
- die Gerätekennzahlen der lokalen Computersysteme registriert sind,
- in der Zentralstelle Mittel zur Berechnung einer neuen Gerätekennzahl für die Computersysteme vorhanden sind, wobei die Berechnung einer neuen Gerätekennzahl ID (i) für ein Computersystem (2a) mit einer zusammen mit einem Freischaltwunsch zu einer ausgewählten Datei eines der Speichermedien übermittelten Gerätekennzahl ID (i-1) des Computersystems (2a) und einem in der Zentralstelle abgespeicherten Wechselcode c erfolgt,
- Mittel zur Festlegung eines ersten chiffrierten Codes PIN mit der berechneten Gerätekennzahl ID (i) und einem Schlüssel k vorhanden sind,
- Mittel zur Festlegung eines zweiten chiffrierten CODES ACW mit der Kennung der freizugebenden Datei und dem Schlüssel k vorhanden sind,
und in dem lokalen Computersystem (2a) Mittel
- zur Berechnung der neuen Gerätekennzahl ID (i) aus der bisher abgespeicherten Gerätekennzahl ID (i-1) und dem in einem nicht-flüchtigen Speicher des lokalen Computersystems (2a) abgespeicherten Wechselcodes c
- zur Berechnung des Schlüssels k aus dem ersten chiffrierten Code PIN und der Gerätekennzahl ID (i),
- zur Berechnung der Kennung AC der Datei mit dem zweiten chiffrierten Code ACW und dem Schlüssel k sowie
- zur Freigabe der mit der Kennung AC versehenen Datei zur Nutzung durch das lokale Computersystem vorhanden sind.

18. System nach Anspruch 17, **dadurch gekennzeichnet, dass** es sich bei den Speichermedien um optische Speichermedien, insbesondere CD-ROM oder DVD handelt.

19. System nach Anspruch 17 oder 18, **dadurch gekennzeichnet, dass** es sich bei den lokalen Computersystemen (2) um Navigationscomputer in Kraftfahrzeug-Navigationssystemen handelt.

20. System nach einem der Ansprüche 17 bis 19, **dadurch gekennzeichnet, dass** das lokale Computersystem (2) ein Dateiverwaltungssystem enthält, das nur solche Dateien zur Nutzung freigibt, zu denen die Kennung AC vorliegt.

21. System nach einem der Ansprüche 17 bis 20, **dadurch gekennzeichnet, dass** der erste und der zweite chiffrierte Code direkt von der Zentralstelle (1) in das lokale Computersystem übermittelbar ist.

22. System nach Anspruch 21, **dadurch gekennzeichnet, dass** die Übermittlung drahtlos erfolgt.

23. System nach Anspruch 21 oder 22, **dadurch gekennzeichnet, dass** das lokale Computersystem (2) mit einem Funktelefon verbunden ist.

24. System nach einem der Ansprüche 17 bis 23, **dadurch gekennzeichnet, dass** die Dateien verschlüsselt sind.

25. System nach einem der Ansprüche 17 bis 24, **gekennzeichnet durch** Mittel zum Übertragen der Dateien von der Zentralstelle zu dem lokalen Computersystem.

26. System nach Anspruch 24, **dadurch gekennzeichnet, dass** der Schlüssel k zur Entschlüsselung der Dateien in einem der chiffrierten Codes enthalten ist.

27. System nach einem der Ansprüche 17 bis 26, **dadurch gekennzeichnet, dass** es für elektronischen Handel der Nutzungsrechte ausgelegt ist.

28. System nach einem der Ansprüche 17 bis 27, **gekennzeichnet durch** ein tragbares Speichermedium geringer Dichte, insbesondere eine IC-card, auf dem der erste und der zweite Code abgespeichert sind.

## Claims

1. Method for enabling a file, which is stored on a storage medium together with at least one other file and is provided with an identifier AC, for use by a single computer system or by a limited number of local computer systems by:
- transmitting a device identification number ID (i-1) for the computer system, which is stored in the computer system, and a request for enabling a file which needs to be enabled on the storage medium to a central station, and by the central station,
- calculating a new device identification number ID(i) using the transmitted device identification number ID(i-1) and an alternating code c stored in the central station,
- stipulating a first scrambled code PIN using the calculated device identification number ID(i) and a key k,
- stipulating a second scrambled code ACW using the identifier for the file which is to be enabled and the key k,
- transmitting the first scrambled code PIN and the second scrambled code ACW from the central station to the local computer system, and by the local computer system,
- calculating the new device identification number ID(i) in the local computer system from the previously stored device identification number ID(i-1) and the alternating code c, which is stored in a nonvolatile memory of the local computer system,
- calculating the key k using the first scrambled code PIN and the device identification number ID(i),
- calculating the identifier AC for the file using the second scrambled code ACW and the key k,
- enabling the file provided with the identifier AC for use by the local computer system.

2. Method according to claim 1, **characterized in that** the files are encrypted using the key k and are decrypted for use by the computer system using the key k.

3. Method according to one of the preceding claims, **characterized in that** the files are stored on the storage medium in a logical file structure, in particular in a hierarchical file structure.

4. Method according to one of the preceding claims, **characterized in that** the identifier for a file can be described as a vector.

5. Method according to claim 4, **characterized in that** the vector has binary components.

6. Method according to claim 4 or 5, **characterized in that** the vector has at least m components, where m is the number of files.

7. Method according to claim 6, **characterized in that** m components a(1), a(2), a(3), ... of the vector AC(x)=(a(1), a(2), a(3), ..., a(x-1), a(x), a(x+1), ..., a(m)) are used to determine the position of a file D(x) in the hierarchical file structure such that all the components of the vector AC(x) which are allocated to files on which the file D(x) is hierarchically dependent take a first value, in particular the value 1, while all the remaining components, which are allocated to files on which the file D(x) is not hierarchically dependent, take a second value, in particular the value O [sic] .

8. Method according to one of the preceding claims, **characterized in that** the key k can be described as a vector.

9. Method according to one of the preceding claims, **characterized in that** the device identifier ID can be described as a vector.

10. Method according to one of the preceding claims, **characterized in that** the computer system is a navigation computer in a motor vehicle navigation system.

11. Method according to one of the preceding claims, **characterized in that** the files contain road map data.

12. Method according to one of the preceding claims, **characterized in that** the files contain application programs.

13. Method according to one of the preceding claims, **characterized in that** one of the scrambled codes contains an information item relating to a time limit on the use right.

14. Method according to claim 13, **characterized in that** the second scrambled code can be described as a vector, and the vector contains one or more components storing the information item relating to the time limit on the period of use.

15. Method according to one of the preceding claims, **characterized in that** the vectors for the scrambled codes are converted into decimal numbers before transmission.

16. Method according to one of the preceding claims, **characterized in that** the file(s) is (are) transmitted to the computer system via a communication network.

17. System for managing and enabling use rights on files, which contains the following components:
- a multiplicity of local computer systems (2a to 2n), where each of the computer systems (2) can be identified by a device identification number stored in the computer system (2),
- storage media for the local computer systems (2), on which at least two files are stored and provided with an identifier,
- a central station (1) having a central computer system, where the central station contains means for stipulating a first and a second scrambled code (PIN and ACW) for the purpose of enabling use rights on a file for one of the local computer systems, at least one of the codes containing the device identification number for the local computer system, and at least one of the codes containing the identifier AC for the file which is to be enabled,
- means for transmitting the scrambled codes to the local computer system (2),
- means for unscrambling the transmitted codes in the local computer system (2) using the device identification number stored in the local computer system (2), and for enabling the file for use by the local computer system (2),
**characterized in that** the central station
- has a record of the device identification numbers of the local computer systems,
- has means for calculating a new device identification number for the computer systems, with a new device identification number ID (i) being calculated for a computer system (2a) using a device identification number ID (i-1) for the computer system (2a), which has been transmitted together with a request for enabling a selected file from one of the storage media, and an alternating code c stored in the central station,
- has means for stipulating a first scrambled code PIN with the calculated device identification number ID (i) and a key k,
- has means for stipulating a second scrambled CODE ACW with the identifier of the file which needs to be enabled and the key k,
and the local computer system (2a) has means
- for calculating the new device identification number ID (i) from the hitherto stored identification number ID (i-1) and the alternating code c stored in a nonvolatile memory in the local computer system (2a),
- for calculating the key k from the first scrambled code PIN and the device identification number ID (i),
- for calculating the identifier AC of the file with the second scrambled code ACW and the key k, and
- for enabling the file provided with the identifier AC for use by the local computer system.

18. System according to claim 17, **characterized in that** the storage media are optical storage media, in particular CD-ROM or DVD.

19. System according to claim 17 or 18, **characterized in that** the local computer systems (2) are navigation computers in motor vehicle navigation systems.

20. System according to claims 17 to 19, **characterized in that** the local computer system (2) contains a file management system which enables for use only those files for which the identifier AC is present.

21. System according to one of claims 17 to 20, **characterized in that** the first and the second scrambled code can be transmitted directly from the central station (1) to the local computer system.

22. System according to claim 21, **characterized in that** the transmission takes place wirelessly.

23. System according to claim 21 or 22, **characterized in that** the local computer system (2) is connected to a radio telephone.

24. System according to one of claims 17 to 23, **characterized in that** the files are encrypted.

25. System according to one of claims 17 to 24, **characterized by** means for transmitting the files from the central station to the local computer system.

26. System according to claim 24, **characterized in that** the key k for decrypting the files is held in one of the scrambled codes.

27. System according to one of claims 17 to 26, **characterized in that** it is designed for electronic commerce for the use rights.

28. System according to one of claims 17 to 27, **characterized by** a portable low-density storage medium, in particular an IC card, on which the first and the second code are stored.

## Revendications

1. Procédé permettant d'activer un fichier mémorisé sur un support d'informations en commun avec au moins un autre fichier et pourvu d'un indicatif d'identification AC, permettant d'utiliser ledit fichier sur un seul ou sur un nombre limité de systèmes informatiques locaux, par:
- transmission à une centrale d'un indicatif d'appareil ID(i-1) mémorisé dans le système informatique et spécifique au système informatique et d'une demande d'activation du fichier du support d'informations à valider et par
- calcul, dans la centrale, d'un nouvel indicatif d'appareil ID(i) à l'aide de l'indicatif d'appareil ID(i-1) transmis et d'un code de changement c mémorisé dans la centrale,
- définition d'un premier code crypté PIN à l'aide de l'indicatif d'appareil ID(i) calculé et d'une clé k,
- définition d'un deuxième code crypté ACW à l'aide de l'indicatif d'identification du fichier à valider et de la clé k,
- transmission par la centrale du premier code crypté PIN et du deuxième code crypté ACW au système informatique local et par
- calcul, dans le système informatique local, du nouvel indicatif d'appareil ID(i) dans le système informatique local à partir de l'indicatif d'appareil ID(i-1) mémorisé jusqu'alors et du code de changement c stocké dans une mémoire non volatile du système informatique local,
- calcul de la clé k à l'aide du premier code crypté PIN et de l'indicatif d'appareil ID(i),
- calcul de l'indicatif d'identification AC du fichier à l'aide du deuxième code crypté ACW et de la clé k,
- validation du fichier doté de l'indicatif d'identification AC pour son utilisation par le système informatique local.

2. Procédé selon la revendication 1, **caractérisé par le fait que** les fichiers sont cryptés avec la clé k et sont décryptés avec la clé k pour leur utilisation par le système informatique.

3. Procédé selon l'une des revendications précédentes, **caractérisé par le fait que** les fichiers sont stockés sur le support d'informations suivant une structure logique, notamment, suivant une structure hiérarchique.

4. Procédé selon l'une des revendications précédentes, **caractérisé par le fait que** l'indicatif d'identification d'un fichier peut être décrit par un vecteur.

5. Procédé selon la revendication 4, **caractérisé par le fait que** le vecteur comporte des composantes binaires.

6. Procédé selon la revendication 4 ou 5, **caractérisé par le fait que** le vecteur comporte au moins m composantes, m étant le nombre de fichiers.

7. Procédé selon la revendication 6, **caractérisé par le fait que**, par l'intermédiaire de m composantes a(1), a(2), a (3), ... du vecteur AC(x) = (a(1), a(2), a(3), ..., a(x-1), a(x), a (x+1), ..., a(m)), la position d' un fichier D(x) est définie dans la structure hiérarchique des fichiers de manière telle que toutes les composantes du vecteur AC(x), qui correspondent à des fichiers et dont le fichier D(x) dépend d'une façon hiérarchique, prennent une première valeur, notamment la valeur 1, alors que toutes les composantes restantes, qui correspondent à des fichiers et dont le fichier D(x) ne dépend pas d'une façon hiérarchique, prennent une deuxième valeur, notamment la valeur 0.

8. Procédé selon l'une des revendications précédentes, **caractérisé par le fait que** la clé k peut être décrite par un vecteur.

9. Procédé selon l'une des revendications précédentes, **caractérisé par le fait que** l'indicatif d'identification ID de l'appareil peut être décrit par un vecteur.

10. Procédé selon l'une des revendications précédentes, **caractérisé par le fait que** le système informatique est un ordinateur de navigation d'un système de navigation pour véhicule automobile.

11. Procédé selon l'une des revendications précédentes, **caractérisé par le fait que** les fichiers renferment des données de cartes routières.

12. Procédé selon l'une des revendications précédentes, **caractérisé par le fait que** les fichiers renferment des programmes d'application.

13. Procédé selon l'une des revendications précédentes, **caractérisé par le fait que** l'un des codes cryptés renferme une information relative à une limitation dans le temps du droit d'utilisation.

14. Procédé selon la revendication 13, **caractérisé par le fait que** le deuxième code crypté peut être décrit par un vecteur et que le vecteur renferme une ou plusieurs composantes dans lesquelles est stockée l'information relative à la limitation dans le temps du droit d'utilisation.

15. Procédé selon l'une des revendications précédentes, **caractérisé par le fait que** les vecteurs du code crypté sont convertis en nombres décimaux avant leur transmission.

16. Procédé selon l'une des revendications précédentes, **caractérisé par le fait que** le ou les fichiers est (ou sont) transmis au système informatique par l'intermédiaire d'un réseau de communication.

17. Système destiné à la gestion et à la validation de droits d'utilisation à des fichiers, qui comprend les composantes suivantes:
- une pluralité de systèmes informatiques locaux (2a à 2n), où chacun des systèmes informatiques (2) est identifiable par un indicatif d'appareil stocké dans le système informatique (2),
- des supports d'informations pour les systèmes informatiques locaux (2), sur lesquels au moins deux fichiers sont mémorisés et dotés d'un indicatif d'identification,
- une centrale (1) avec un système informatique central, où, pour la validation de droits d'utilisation à un fichier pour l'un des systèmes informatiques locaux, des moyens existent dans la centrale pour définir un premier et un deuxième code crypté (PIN et, respectivement, ACW), où au moins l'un des codes renferme l'indicatif d'appareil du système informatique local et au moins l'un des codes renferme l'indicatif d'identification AC du fichier à activer,
- des moyens permettant de transmettre les codes cryptés au système informatique local (2),
- des moyens permettant de décrypter les codes transmis au système informatique local (2) en faisant appel à l'indicatif d'appareil mémorisé dans le système informatique local (2) et permettant d'activer le fichier pour son utilisation par le système informatique local (2),
**caractérisé par le fait que**, dans la centrale,
- les indicatifs d'appareil des systèmes informatiques locaux sont enregistrés,
- dans la centrale, il existe des moyens permettant de calculer un nouvel indicatif d'appareil pour les systèmes informatiques, le calcul d'un nouvel indicatif d'appareil ID(i) pour un système informatique (2a) se faisant à l'aide d'un indicatif d'appareil ID(i-1) du système informatique (2a) transmis en commun avec une demande d'activation d'un fichier sélectionné sur l'un des supports d'informations et d'un code de changement c mémorisé dans la centrale,
- il existe des moyens permettant, à l'aide de l'indicatif d'appareil calculé ID(i) et d'une clé k, de définir un premier code crypté PIN,
- il existe des moyens permettant, à l'aide de l'indicatif d'identification du fichier à valider et de la clé k, de définir un deuxième code crypté ACW
et, dans le système informatique local (2a), il y a des moyens permettant de
- calculer le nouvel indicatif d'appareil ID(i) à partir de l'indicatif d'appareil ID(i-1) mémorisé jusqu'alors et du code de changement c mémorisé dans une mémoire non volatile du système informatique local (2a),
- calculer la clé k à partir du premier code crypté PIN et de l'indicatif d'appareil ID(i),
- calculer, à l'aide du deuxième code crypté ACW et de la clé k, l'indicatif d'identification AC du fichier, ainsi que
- valider le fichier doté de l'indicatif d'identification AC pour son utilisation par le système informatique local.

18. Système selon la revendication 17, **caractérisé par le fait que** les supports d'informations sont des supports optiques d'informations, notamment des disques cédéroms ou des disques DVD.

19. Système selon la revendication 17 ou 18, **caractérisé par le fait que** les systèmes informatiques locaux (2) sont des ordinateurs de navigation dans des systèmes de navigation pour véhicule automobile.

20. Système selon l'une des revendications 17 à 19, **caractérisé par le fait que** le système informatique local (2) renferme un système de gestion des fichiers qui ne valide pour leur utilisation que des fichiers pour lesquels il y a un indicatif d'identification AC.

21. Système selon l'une des revendications 17 à 20, **caractérisé par le fait que** le premier et le deuxième code crypté peuvent être transmis directement par la centrale (1) au système informatique local.

22. Système selon la revendication 21, **caractérisé par le fait que** la transmission se fait sans fil.

23. Système selon la revendication 21 ou 22, **caractérisé par le fait que** le système informatique local (2) est relié à un téléphone de radio mobile.

24. Système selon l'une des revendications 17 à 23, **caractérisé par le fait que** les fichiers sont cryptés.

25. Système selon l'une des revendications 17 à 24, **caractérisé par** des moyens permettant de transmettre les fichiers de la centrale au système informatique local.

26. Système selon la revendication 24, **caractérisé par le fait que** la clé k destinée au décryptage des fichiers est contenue dans l'un des codes cryptés.

27. Système selon l'une des revendications 17 à 26, **caractérisé par le fait qu'**il est configuré pour le commerce électronique des droits d'utilisation.

28. Système selon l'une des revendications 17 à 27, **caractérisé par** un support d'informations portable de faible densité, notamment par une carte à puce, sur lequel sont mémorisés le premier et le deuxième code.
